# EUROPEAN PATENT SPECIFICATION

(11) **EP 3 947 121 B1**
(45) Date of publication and mention of the grant of the patent: **22.05.2024**
(21) Application number: 19724262.1
(22) Date of filing: 25.03.2019
(51) Int. Cl.: B62D 55/21, B62D 55/088

(54) **COUPLING FOR LINKS OF TRACKS**
KUPPLUNG FÜR KETTENGLIEDER
COUPLAGE POUR LIAISONS DE PISTES

(43) Date of publication of application: 09.02.2022
(73) Proprietor: Italtractor ITM S.p.A., 40056 Valsamoggia (BO) (IT)
(72) Inventor: CALIA, Eustachio, 75100 MATERA (IT); COVIELLO, Mario, 85100 POTENZA (IT); GUARINO, Annunziato, 85043 LATRONICO (PZ) (IT)
(74) Representative: Porta & Consulenti Associati S.p.A.
(86) International application number: PCT/IT2019/000025
(87) International publication number: WO 2020/194353

(56) References cited:
- WO-A1-2010/113197
- US-A1- 2017 158 269
- US-A1- 2018 162 466

## Description

The present invention relates to a coupling for links of tracks, particularly for tracked works vehicles, such as earth movement vehicles, works vehicles for mines and/or construction sites and the like.

The use is widespread of machines equipped with tracks for the transmission of motion from the drive unit to the ground. The use of machinery with tracks is preferred in environments where traction is problematic. Such machines can be used to carry out various different tasks for example on construction sites, for demolition, at dumps and in mines. The term "undercarriage" refers to all the components of the machine that are necessary and which support the transmission of motion between the reduction gear and the ground. In particular they are: chain, drive wheel, track tensioning wheel, lower rollers and upper rollers.

During operation the chain (also called the track) is assembled on the machine, forming a continuous structure which is closed upon itself, wrapped around two or more wheels arranged at a determined operating center distance, and guided by a variable number of rollers. The wheel that transmits motion from the drive unit to the chain is called a "sprocket" or a "tumbler". Such component can be constituted in a single piece or by a plurality of segments. There is also at least one idle wheel, or track tensioning wheel, to return and close the ring of the chain. The chain, in its upper travel, can be supported by one or more upper rollers. The lower travel is supported by the lower rollers. The vertical loads resulting from the interaction between the chain and the machine are transmitted to the chassis of the machine by way of the lower rollers. Furthermore, the lower rollers are essential to achieve relative motion between ground and machine.

A chain coupling is a mechanical system which is capable of connecting two structures while allowing their mutual motion; such movement can be rotating or oscillating.

The coupling is composed of a pin connected to the first structure and
connected to the first structure and by a bushing connected to the second structure. The pin is fitted into the longitudinal cavity of the bushing.

The contact surfaces between the pin and the bushing transmit the tensile load from one structure to the other.

The inside diameter of the bushing is larger than the outside diameter of the pin: such size difference creates a play that enables the relative rotation between the first structure and the second.

When the coupling is subjected to a load, the pin tends to bend, resulting in a concentration of loads on reduced contact surfaces (edge load); such configuration considerably increases the adhesive wear of the surfaces of the bushing and of the pin, leading to a reduction of the working life of the coupling.

Examples of coupling for links of tracks are provided in documents US 2017/0158269 A1, WO 2010/113197 A1 and US 2018/0162466 A1.

The aim of the present invention is to solve the above mentioned drawbacks, by providing a coupling for links of tracks in which the risk of bending of the pin is minimized, even when the track is subjected to heavy loads.

Within this aim, an object of the invention is to provide a coupling for links of tracks that minimizes the phenomena of wear between the pin and the bushing.

Another object of the invention is to provide a coupling for links of tracks with a long working life, in general exceeding that of conventional couplings.

Another object of the present invention is to provide a coupling for links of tracks which is of low cost, easily and practically implemented, and safe in use.

This aim and these and other objects which will become better apparent hereinafter are achieved by a coupling for links of tracks, of the type comprising a pin which is integral with at least one first link, and a bushing, fitted rotatably over said pin, which is integral with at least one second link, wherein:
- said pin comprises a cylindrical central portion which has a first predefined diameter and two end portions which have a second predefined diameter, the first predefined diameter being larger than the second predefined diameter;
- said pin comprises an axial non-through channel connected to the outside at one of its ends, and a substantially radial passage between the outer lateral surface of its central portion and said inner channel;
- said bushing comprises a through hole with a diameter which is larger than and proximate to the outside diameter of said central portion of said pin, on which it is arranged in the assembled configuration;
- said pin supports, substantially proximate to the end portions of said central portion, respective sealing and alignment means which abut on respective end fronts of said bushing for the confinement of the fluid lubricant interposed between said pin and said bushing;
- said means for sealing and alignment comprise at least one rigid spacer ring, which is stably held on at least one end edge of said central portion of said pin, and an annular sealing gasket, externally surmounting said spacer ring, which is provided with an elastically deformable lip which abuts on an end face of said bushing in order to isolate the interspace defined between said pin and said bushing, within which the fluid lubricant is confined.

Further characteristics and advantages of the invention will become better apparent from the description of a preferred, but not exclusive, embodiment of the coupling for links of tracks according to the invention, which is illustrated by way of non-limiting example in the accompanying drawings wherein:

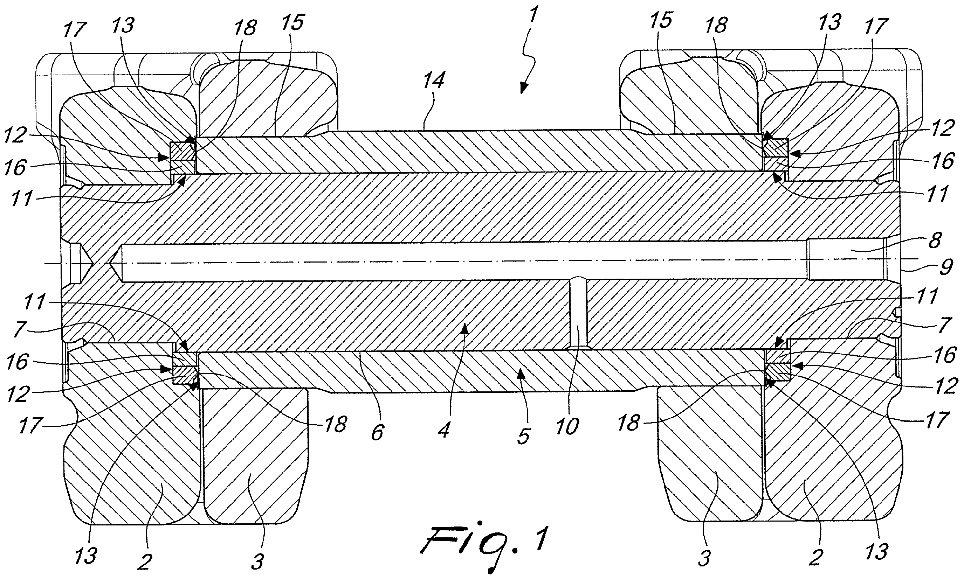

Figure 1 is a cross-sectional side view, taken along an axial plane, of a coupling for links of tracks according to the invention.

With reference to the figures, the reference numeral 1 generally designates a coupling for links 2 and 3 of tracks of terrestrial vehicles.

The coupling 1 according to the invention comprises a pin 4 which is integral with at least one first link 2, and a bushing 5, fitted rotatably over the pin 4.

The bushing 5 is in turn integral with at least one second link 3.

The pin 4 comprises a cylindrical central portion 6 which has a first predefined diameter and two end portions 7 which have a second predefined diameter. In the specific shape structure of the pin 4 according to the

In the specific shape structure of the pin 4 according to the invention, the first predefined diameter (i.e. that of the central portion 6) is larger than the second predefined diameter (that of the end portions 7).

The pin 4 further comprises an axial non-through channel 8 which is connected to the outside at one of its ends: in particular the channel 8 leads outside through the opening 9.

There is also a substantially radial passage 10, which connects the outer lateral surface of the central portion 6 of the pin 4 and the inner channel 8.

The bushing 5 can conveniently comprise an axial through hole with a diameter a little larger than the first outside diameter of the central portion 6 of the pin 4; the bushing 5 is, in the assembled configuration, arranged on the central portion 6 of the pin 4 (which, in turn, is inserted in the through hole of the bushing 5).

The pin 4 supports, substantially proximate to the end portions 11 of the central portion 6, respective sealing and alignment means 12 which abut on respective end fronts 13 of the bushing 5, for the confinement of the fluid lubricant interposed between the pin 4 and the bushing 5.

With particular reference to an embodiment of undoubted practical and applicative interest, the pin 4 can advantageously be coupled to the at least one first link 2 at its end portions 7.

The at least one first link 2 will comprise, in such case, at least one respective hole which has an inside diameter which is smaller and proximate to the second predefined diameter (i.e. that of the end portions 7) for the keying of the at least one link 2 on the respective end portion 7 of the pin 4.

With particular reference to the embodiment described previously, the first links 2 can positively be two in number: each first link 2 will therefore comprise at least one respective hole for its keying on a corresponding end portion 7 of the pin 4 (i.e. the links 2 will be keyed on the portions 7 of the pin 4 in a symmetrical configuration with respect to the longitudinal midpoint plane of the pin 4).

It should be noted that the term "keying" means, in mechanical constructions, the joining of two parts, which is achieved by introducing a protrusion of one of them into a corresponding cavity of the other, with generally forced mounting; in particular, cold-keying is the insertion of the protrusion into the cavity using a press, while in hot-keying such insertion is achieved by heating the outer part, which as it cools tightens around the inner part.

It should be noted that the bushing 5 can positively comprise a central portion 14 with an enlarged cross-section and two end portions 15 which have a cross-section that is substantially smaller than that of the central portion 14: the bushing 14, also, will be more slender at the ends and thicker at the center.

It is convenient to note that the bushing 5 is coupled to the at least one second link 3 at its end parts.

The at least one second link 3 in fact comprises at least one respective recess which has an inside diameter which is smaller and proximate to the diameter of an end part of the bushing 5, so that the link 3 can be keyed on the respective end part of the bushing 5.

The second links 3 are also preferably two in number: each second link will comprise at least one respective recess for its keying on a corresponding end part of the bushing 5.

With particular reference to the embodiments cited above, the end parts of the bushing on which the links 3 are keyed are the two end portions 15 which have a cross-section that is substantially smaller than that of the central portion 14.

The links 3, with respect to the bushing 5, are coupled symmetrically, with respect to the midpoint plane that is perpendicular to the longitudinal axis of the bushing 5.

In order to obtain an embodiment that is particularly efficient and adapted to operate even with heavy mechanical loads, it should be noted that the means for sealing and alignment 12 could profitably comprise at least one rigid spacer ring 16, which is stably held on at least one end edge of the central portion 6 of the pin, and an annular sealing gasket 17, externally surmounting the spacer ring 16, which is provided with an elastically deformable lip 18 which abuts on an end face of the bushing 5.

The lip 18, abutting on the end face of the bushing 5, isolates the interspace defined between the pin 4 and the bushing 5 (which, by having an inside diameter that is slightly larger than that of the central portion 6, is accommodated with play on the pin 4).

The play present between the outer surface of the central portion 6 of the pin 4 and the internal cavity of the bushing 5 constitutes part of the aforesaid interspace, within which the fluid lubricant which is intended to facilitate the reciprocal movements of the pin 4 and the bushing 5 (and, as a consequence, of the links 2 with respect to the links 3), is confined.

In order to ensure that in the configuration of use the coupling 1 optimizes the behavior of the track in which it is installed, while reducing the phenomena of wear (in particular of adhesive wear) and minimizing friction, the axial non-through channel 8 will be able to advantageously removably accommodate a closure plug, at its outward opening 9. By virtue of the closure plug, it will thus be possible to define a closed tank for the fluid lubricant, within a chamber constituted by the axial channel 8, the transverse passage 10, and by the interspace present between the pin 4 and the bushing 5, which in turn is sealed by the means for sealing and alignment 12.

The protection of the present invention extends to any track for a terrestrial vehicle that comprises a plurality of links 2, 3 which are mutually interconnected by way of respective couplings 1 which are provided with at least one respective pin 4, which is integral with at least one link 2 upstream, and at least one respective bushing 5, which is integral with a link 3 downstream; in such couplings 1 each bushing 5 is rotatably fitted over a respective pin 4.

Each pin 4 comprises a cylindrical central portion 6 which has a first predefined diameter and two end portions 7 which have a second predefined diameter. The first predefined diameter of the central portion 6 is larger than the second predefined diameter of the portions 7.

Each pin 4 further comprises an axial non-through channel 8, which is connected to the outside at one of the ends of the pin 4. Each pin 4 further comprises a substantially radial passage 10 between the outer lateral surface of its central portion 6 and the inner channel 8.

Each bushing 5 comprises a through hole with a diameter which is larger than and proximate to the outside diameter of the central portion 6 of the pin 4, on which it is arranged in the assembled configuration.

Each pin 4 supports, substantially proximate to the end portions 11 of the central portion 6, respective means for sealing and alignment 12 which abut on respective end fronts 13 of the respective bushing 5, for the confinement of the fluid lubricant interposed between the pin 4 and the bushing 5.

Advantageously the present invention solves the above mentioned problems, by providing a coupling 1 for links 2, 3 of tracks in which the risk of bending of the pin 4 is minimized, even when the track is subjected to heavy loads.

This is ensured by the particular shape structure of the pin 4 which, by having a central portion 6 with a larger diameter than that of the end portions 7 (to which the links 2 are coupled), ensures a greater bending rigidity.

Conveniently the coupling 1 according to the invention minimizes the phenomena of wear between the pin 4 and the bushing 5, thanks to the presence of an isolated interspace between them, within which it is possible to confine a fluid lubricant.

Positively the coupling 1 according to the invention has a long working life, in general exceeding that of conventional couplings, precisely because, it being more rigid and less subject to wear, it does not undergo phenomena of degradation during its operation.

Positively the coupling 1 according to the invention is easily and practically implemented and is low cost: such characteristics make the coupling 1 according to the invention an innovation that is safe in use.

The invention, thus conceived, is susceptible of numerous modifications and variations, all of which are within the scope of the appended claims.

In the embodiments illustrated, individual characteristics shown in relation to specific examples may in reality be interchanged with other, different characteristics, existing in other embodiments.

In practice, the materials employed, as well as the dimensions, may be any according to requirements and to the state of the art.

Where the technical features mentioned in any claim are followed by reference numerals and/or signs, those reference numerals and/or signs have been included for the sole purpose of increasing the intelligibility of the claims and accordingly, such reference numerals and/or signs do not have any limiting effect on the interpretation of each element identified by way of example by such reference numerals and/or signs.

## Claims

1. A coupling for links (2, 3) of tracks, of the type comprising a pin (4) which is integral with at least one first link (2), and a bushing (5), fitted rotatably over said pin (4), which is integral with at least one second link (3), wherein:
- said pin (4) comprises a cylindrical central portion (6) which has a first predefined diameter and two end portions (7) which have a second predefined diameter;
- said pin (4) comprises a non-through axial channel (8) connected to the outside at one of its ends, and a substantially radial passage (10) between the outer lateral surface of its central portion (6) and said inner channel (8);
- said bushing (5) comprises a through hole with a diameter which is larger than and proximate to the outside diameter of said central portion (6) of said pin (4), on which it is arranged in the assembled configuration;
- said pin (4) supports respective sealing and alignment means (12) which abut on respective end fronts (13) of said bushing (5), for the confinement of the fluid lubricant interposed between said pin (4) and said bushing (5); said sealing and alignment means (12) comprising at least one rigid spacer ring (16) and an annular sealing gasket (17),
**characterized in that**
- the first predefined diameter is larger than the second predefined diameter;
- said sealing and alignment means (12) are supported by said pin (4) substantially proximate to the end portions of said central portion (6); and
- said at least one rigid spacer ring (16) is stably held on at least one end edge of said central portion (6) of said pin (4), and
- said annular sealing gasket (17) externally surmounts said spacer ring (16) and is provided with an elastically deformable lip (18) which abuts on an end face (13) of said bushing (5) in order to isolate the interspace defined between said pin (4) and said bushing (5), within which the fluid lubricant is confined.

2. The coupling according to claim 1, **characterized in that** said pin (4) is coupled to said at least one first link (2) at its end portions (7), said at least one first link (2) comprising at least one respective hole which has a smaller inside diameter and which is proximate to said second predefined diameter of said end portions (7) for the keying of said at least one link (2) on the respective end portion (7) of said pin (4).

3. The coupling according to claim 2, **characterized in that** said first links (2) are two in number, each first link (2) comprising at least one respective hole for its keying on a corresponding end portion (7) of said pin (4).

4. The coupling according to claim 1, **characterized in that** said bushing (5) comprises a central portion (14) with an enlarged cross-section and two end portions (15) which have a cross-section that is substantially smaller than that of the central portion (14).

5. The coupling according to claim 1, **characterized in that** said bushing (5) is coupled to the said at least one second link (3) at its end parts, said at least one second link (3) comprising at least one respective recess which has an inside diameter which is smaller and proximate to the diameter of an end part of said bushing (5), for the keying of said at least one link (3) on the respective end part of said bushing (5).

6. The coupling according to claim 5, **characterized in that** said second links (3) are two in number, each second link (3) comprising at least one respective recess for its keying on a corresponding end part of said bushing (5).

7. The coupling according to one or more of claims from 4 to 6, **characterized in that** said end parts of said bushing (5) are the two end portions (15) which have a cross-section that is substantially smaller than that of the central portion (14).

8. The coupling according to one or more of the preceding claims, **characterized in that** said non-through axial channel (8) removably accommodates a closure plug at its outward opening (9), thus defining a closed tank for the fluid lubricant within a chamber constituted by said axial channel (8), said transverse passage (10), and the interspace present between said pin (4) and said bushing (5), which in turn is sealed by said means for sealing and alignment (12).

9. The coupling according to one or more of the preceding claims, **characterized in that** said pin (4), by virtue of said central portion (6) having a first diameter larger than that of said end portions (7), has a moment of inertia that is higher than that of conventional pins, thus being less subject to bending and to the phenomenon of adhesive wear.

10. A track for a terrestrial vehicle, of the type comprising a plurality of links (2, 3) which are mutually interconnected by way of respective couplings (1) according to claim 1.

## Patentansprüche

1. Kupplung für Raupenglieder (2, 3) von Raupenketten des Typs umfassend einen Stift (4), der mit mindestens einem ersten Raupenglied (2) integriert ist und eine Buchse (5), die drehbar auf dem Stift (4) angebracht ist, der mit mindestens einem zweiten Raupenglied (3) integriert ist, wobei:
- der Stift (4) einen zylindrischen Mittelabschnitt (6) aufweisend einen ersten vorbestimmten Durchmesser und zwei Endabschnitte (7) aufweisend einen zweiten vorbestimmten Durchmesser umfasst;
- der Stift (4) einen nicht-durchgehenden axialen Kanal (8) umfasst, der mit der Außenseite an einem seiner Enden verbunden ist, und einen im Wesentlichen radialen Durchgang (10) zwischen der äußeren Seitenfläche seines Mittelabschnitts (6) und dem inneren Kanal (8);
- die Buchse (5) ein Durchgangsloch mit einem Durchmesser aufweist, der größer als der Außendurchmesser des Mittelabschnitts (6) des Stifts (4) ist und nah an diesem ist, auf dem sie in der zusammengebauten Konfiguration angeordnet ist;
- der Stift (4) jeweilige Dicht-und-Ausrichtungsmittel (12) hält, die an jeweiligen Endvorderseiten (13) der Buchse (5) anliegen, um das zwischen dem Stift (4) und der Buchse (5) befindliche flüssige Schmiermittel einzuschließen; wobei die Dicht-und-Ausrichtungsmittel (12) mindestens einen starren Distanzring (16) und eine ringförmige Dichtung (17) umfassen, **dadurch gekennzeichnet, dass**
- der erste vordefinierte Durchmesser größer als der zweite vordefinierte Durchmesser ist;
- die Dicht-und-Ausrichtungsmittel (12) durch den Stift (4) im Wesentlichen in der Nähe der Endabschnitte des Mittelabschnitt (6) gehalten werden; und
- der mindestens eine starre Distanzring (16) fest auf mindestens einem Endrand des Mittelabschnitts (6) des Stifts (4) gehalten wird, und
- die ringförmige Dichtung (17) den Distanzring (16) außen überwindet und mit einer elastisch verformbaren Lippe (18) versehen ist, die an einer Endfläche (13) der Buchse (5) anliegt, um den zwischen dem Stift (4) und der Buchse (5) definierten Zwischenraum, in dem das flüssige Schmiermittel eingeschlossen ist, zu isolieren.

2. Kupplung nach Anspruch 1, **dadurch gekennzeichnet, dass** der Stift (4) mit dem mindestens einen ersten Raupenglied (2) an seinen Endabschnitten (7) gekoppelt ist, wobei das mindestens eine erste Raupenglied (2) mindestens ein entsprechendes Loch aufweist, das einen kleineren Innendurchmesser hat und das nah dem zweiten vordefinierten Durchmesser der Endabschnitte (7) ist, um das mindestens eine Raupenglied (2) auf dem entsprechenden Endabschnitt (7) des Stifts (4) zu verkeilen.

3. Kupplung nach Anspruch 2, **dadurch gekennzeichnet, dass** die ersten Raupenglieder (2) zwei an der Zahl sind, wobei jedes erste Raupenglied (2) mindestens ein entsprechendes Loch für seine Verkeilung an einem entsprechenden Endabschnitt (7) des Stifts (4) aufweist.

4. Kupplung nach Anspruch 1, **dadurch gekennzeichnet, dass** die Buchse (5) einen Mittelabschnitt (14) mit einem vergrößerten Querschnitt und zwei Endabschnitte (15) umfasst, die einen Querschnitt aufweisen, der im Wesentlichen kleiner als der des Mittelabschnitts (14) ist.

5. Kupplung nach Anspruch 1, **dadurch gekennzeichnet, dass** die Buchse (5) an ihren Endteilen mit dem mindestens einen zweiten Raupenglied (3) gekoppelt ist, wobei das mindestens eine zweite Raupenglied (3) mindestens eine entsprechende Aussparung aufweist, die einen Innendurchmesser aufweist, der kleiner ist und nah dem Durchmessers eines Endteils der Buchse (5) liegt, um das mindestens eine Raupenglied (3) an dem entsprechenden Endteil der Buchse (5) zu verkeilen.

6. Kupplung nach Anspruch 5, **dadurch gekennzeichnet, dass** die zweiten Raupenglieder (3) zwei an der Zahl sind, wobei jedes zweite Raupenglied (3) mindestens eine entsprechende Aussparung zur seinen Verkeilung an einem entsprechenden Endteil der Buchse (5) aufweist.

7. Kupplung nach einem oder mehreren der Ansprüche 4 bis 6, **dadurch gekennzeichnet, dass** die Endteile der Buchse (5) die beiden Endabschnitte (15) sind, die einen Querschnitt aufweisen, der im Wesentlichen kleiner als der des Mittelabschnitts (14) ist.

8. Kupplung nach einem oder mehreren der vorhergehenden Ansprüche, **dadurch gekennzeichnet, dass** der nicht-durchgehende axiale Kanal (8) an seiner äußeren Öffnung (9) einen Verschlussstopfen abnehmbar aufnimmt, wodurch ein geschlossener Behälter für das flüssige Schmiermittel innerhalb einer Kammer definiert wird, die durch den axialen Kanal (8), den Querdurchgang (10) und den Zwischenraum zwischen dem Stift (4) und der Buchse (5) gebildet wird, der wiederum durch die Dicht-und-Ausrichtungsmittel (12) abgedichtet wird.

9. Kupplung nach einem oder mehreren der vorhergehenden Ansprüche, **dadurch gekennzeichnet, dass** der Stift (4) aufgrund der Tatsache, dass der Mittelabschnitt (6) einen ersten Durchmesser aufweist, der größer als der der Endteile (7) ist, ein Trägheitsmoment aufweist, das höher als das der herkömmlichen Stifte ist, wodurch er weniger anfällig für Biegung und für das Phänomen des adhäsiven Verschleißes ist.

10. Raupenkette für ein Landfahrzeug, die eine Vielzahl von Raupengliedern (2, 3) umfasst, die durch entsprechende Kupplungen (1) nach Anspruch 1 miteinander verbunden sind.

## Revendications

1. Accouplement pour maillons (2, 3) de chenilles, du type comprenant une goupille (4) qui est solidaire d'au moins un premier maillon (2), et une douille (5), emboîtée de manière rotative sur ladite goupille (4), qui est solidaire d'au moins un second maillon (3), dans lequel :
- ladite goupille (4) comprend une portion centrale (6) cylindrique qui possède un premier diamètre prédéfini et deux portions d'extrémité (7) qui possèdent un second diamètre prédéfini ;
- ladite goupille (4) comprend un canal (8) axial non traversant relié avec l'extérieur à l'une de ses extrémités, et un passage (10) sensiblement radial entre la surface latérale externe de sa portion centrale (6) et ledit canal (8) interne ;
- ladite douille (5) comprend un trou traversant ayant un diamètre qui est plus grand que et à proximité du diamètre extérieur de ladite portion centrale (6) de ladite goupille (4), sur laquelle elle est agencée dans la configuration assemblée ;
- ladite goupille (4) porte des moyens d'étanchéité et d'alignement (12) respectifs qui sont en butée sur des fronts d'extrémité (13) respectifs de ladite douille (5), pour le confinement du lubrifiant fluide interposé entre ladite goupille (4) et ladite douille (5) ; lesdits moyens d'étanchéité et d'alignement (12) comprenant au moins une bague-entretoise (16) rigide et un joint d'étanchéité (17) annulaire,
**caractérisé en ce que**
- le premier diamètre prédéfini est plus grand que le second diamètre prédéfini ;
- lesdits moyens d'étanchéité et d'alignement (12) sont portés par ladite goupille (4) sensiblement à proximité des portions d'extrémité de ladite portion centrale (6) ; et
- ladite au moins une bague-entretoise (16) rigide est maintenue de manière stable sur au moins un bord d'extrémité de ladite portion centrale (6) de ladite goupille (4), et
- ledit joint d'étanchéité (17) annulaire surmonte de manière externe ladite bague-entretoise (16) et est muni d'une lèvre (18) élastiquement déformable qui est en butée sur une face d'extrémité (13) de ladite douille (5) afin d'isoler l'espace intermédiaire défini entre ladite goupille (4) et ladite douille (5), au sein duquel le lubrifiant fluide est confiné.

2. Accouplement selon la revendication 1, **caractérisé en ce que** ladite goupille (4) est couplée audit au moins un premier maillon (2) au niveau de ses portions d'extrémité (7), ledit au moins un premier maillon (2) comprenant au moins un trou respectif qui possède un diamètre intérieur plus petit et qui est à proximité dudit second diamètre prédéfini desdites portions d'extrémité (7) pour le clavetage dudit au moins un maillon (2) sur la portion d'extrémité (7) respective de ladite goupille (4).

3. Accouplement selon la revendication 2, **caractérisé en ce que** lesdits premiers maillons (2) sont au nombre de deux, chaque premier maillon (2) comprenant au moins un trou respectif pour son clavetage sur une portion d'extrémité (7) correspondante de ladite goupille (4).

4. Accouplement selon la revendication 1, **caractérisé en ce que** ladite douille (5) comprend une portion centrale (14) ayant une section transversale élargie et deux portions d'extrémité (15) qui possèdent une section transversale qui est sensiblement plus petite que celle de la portion centrale (14).

5. Accouplement selon la revendication 1, **caractérisé en ce que** ladite douille (5) est accouplée audit au moins un second maillon (3) au niveau de ses parties d'extrémité, ledit au moins un second maillon (3) comprenant au moins un évidement respectif qui possède un diamètre intérieur qui est plus petit et à proximité du diamètre d'une partie d'extrémité de ladite douille (5), pour le clavetage dudit au moins un maillon (3) sur la partie d'extrémité respective de ladite douille (5).

6. Accouplement selon la revendication 5, **caractérisé en ce que** lesdits seconds maillons (3) sont au nombre de deux, chaque second maillon (3) comprenant au moins un évidement respectif pour son clavetage sur une partie d'extrémité correspondante de ladite douille (5).

7. Accouplement selon l'une ou plusieurs des revendications 4 à 6, **caractérisé en ce que** lesdites parties d'extrémité de ladite douille (5) sont les deux portions d'extrémité (15) qui possèdent une section transversale qui est sensiblement plus petite que celle de la portion centrale (14).

8. Accouplement selon l'une ou plusieurs des revendications précédentes, **caractérisé en ce que** ledit canal (8) axial non traversant accueille de manière amovible un bouchon de fermeture à son ouverture extérieure (9), définissant ainsi un réservoir fermé pour le lubrifiant fluide au sein d'une chambre constituée par ledit canal (8) axial, ledit passage (10) transversal et l'espace intermédiaire présent entre ladite goupille (4) et ladite douille (5), qui à son tour est rendu étanche par lesdits moyens d'étanchéité et d'alignement (12).

9. Accouplement selon l'une ou plusieurs des revendications précédentes, **caractérisé en ce que** ladite goupille (4), grâce au fait que ladite portion centrale (6) possède un premier diamètre plus grand que celui desdites portions d'extrémité (7), possède un moment d'inertie qui est plus élevé que celui de goupilles classiques, en étant ainsi moins sujet à une déformation et au phénomène d'usure par adhérence.

10. Chenille pour un véhicule terrestre, du type comprenant une pluralité de maillons (2, 3) qui sont mutuellement reliés entre eux au moyen d'accouplements (1) respectifs selon la revendication 1.
